# EUROPÄISCHE PATENTSCHRIFT

(11) **EP 0 519 864 B1**
(45) Veröffentlichungstag und Bekanntmachung des Hinweises auf die Patenterteilung: **11.02.1998**
(21) Anmeldenummer: 92810390.2
(22) Anmeldetag: 22.05.1992
(51) Int. Cl.: G05D 23/19, A47J 27/62, F24C 15/10

(54) **Verfahren und Schaltungsanordnung zur Ueberwachung und Begrenzung der Betriebstemperatur von elektrisch beheizten Geräten sowie Verwendung des Verfahrens**
Method and circuit for monitoring and limiting the operating temperature of electrically heated apparatus and use of the method
Procédé et circuit pour la surveillance et la limitation de la température de fonctionnement des appareils à chauffage électrique et utilisation du procédé

(30) Priorität: 20.06.1991 CH 1828/91
(43) Veröffentlichungstag der Anmeldung: 23.12.1992
(73) Patentinhaber: ZEHNDER ELECTRONIC AG, CH-5722 Gränichen (CH)
(72) Erfinder: Gruenig, Kurt, CH-5024 Küttigen (CH)
(74) Vertreter: Frauenknecht, Alois J.

(56) Entgegenhaltungen:
- EP-A- 0 074 108
- EP-A- 0 074 868
- EP-A- 0 348 298
- EP-A- 0 380 369
- GB-A- 2 191 024
- IEEE TRANSACTIONS ON CONSUMER ELECTRONICS. Bd. CE-33, Nr. 3, August 1987, NEW YORK US Seiten 136 - 141; R. NARITA: 'A new detection for rice cookers'

## Beschreibung

Die vorliegende Erfindung bezieht sich auf ein Verfahren gemäss dem Oberbegriff des Patentanspruchs 1, sowie auf eine Vorrichtung zur Durchführung des Verfahrens, gemäss Anspruch 6.

Es ist bekannt, bei technischen Geräten den Betriebszustand laufend zu überwachen. So beschreibt die EP -A1- 0 074 108 einen mit Gas betriebenen Kochtopf mit einem ausserhalb des Kochtopfs angebrachten Temperaturfühler, der sequenziell den Temperaturgradienten während des Kochvorgangs überprüft und mit Referenzwerten vergleicht; mit der Annäherung an den Siedepunkt wird der Temperaturgradient, physikalisch bedingt kleiner, so dass über eine Mikroprozessorsteuerung die Gaszufuhr entsprechend gedrosselt wird, um ein Überkochen zu vermeiden.

Es ist ebenfalls bekannt (EP -A1- 0 348 298) in einem elektrischen Kochgerät, mittels einer Temperaturregelung, ein optimales Erwärmen des Kochgutes zu gewährleisten. Hierzu wird auf eine vorbestimmte Temperatur aufgeheizt, die Energiezufuhr temporär, unter Berücksichtigung der Wärmekapazität des Kochgutes, vor dem Erreichen des Kochpunktes bzw. der vorgewählten Temperatur unterbrochen, um dann die Temperatur auf einen konstanten Wert zu regeln.

In den IEEE Transactions on Consumer Electronics, Vol.CE-33,No.3,Aug.1987,S.136-141, ist am Beispiel eines Reiskochers ein mehrstufiger, programmierter Kochvorgang diskutiert, wobei hier eine Mikroprozessorsteuerung mit einem Thermistorfühler die verschiedenen physikalischen Parameter, wie Füllmengen und Kochtemperatur etc. berücksichtigt und Fehler detektiert. Der Kochvorgang wird ebenfalls über eine Überwachung des Temperaturgradienten geregelt; die Steuerung der Energiezufuhr geschieht in üblicher Weise durch elektrische Impulse. Zu Beginn, in einer ersten Stufe, erfolgt ein Vorwärmen des Kochgutes mit einer Pulsfolge geringer Energie, dabei wird die am Thermistor gemessene Temperatur mit der erwarteten Temperatur verglichen. Ist die resultierende Temperatur höher, beispielsweise bei fehlendem Kochgut, so erscheint eine Fehleranzeige, der Heizvorgang wird vorübergehend unterbrochen.- Durch ein erneutes Einschalten wiederholt sich der Heiz- und Abschaltvorgang.

Diese bekannten Geräte weisen den Nachteil auf, dass sie die Überwachung der zulässigen Temperaturen während ihres ordentlichen Betriebs vornehmen und die Überwachungsfunktionen nicht vom Betrieb trennen bzw. diesen wieder aufnehmen, wenn der Anwender dies durch wiederholtes Einschalten versucht. Die Überwachung von resultierenden Temperaturerhöhungen geschieht nur ungenau und erfolgt durch eine Messung der Temperatur in Funktion der Einschaltdauer. Die tatsächlich eingespeisten Energien werden nicht kontrolliert abgegeben, sie sind nur regeltechnisch limitiert.

Es ist keine eigentliche Notabschaltung vorhanden, die Betriebsbereitschaft wird nach einer Temperaturüberschreitung bloss unterbrochen. Wiederholte Einschaltversuche führen daher bei jedem erneutem Versuch zu einer weiteren Temperatursteigerung und schliesslich zur Überhitzung und zu Schäden am Gerät und/oder zu grossen Folgeschäden. Die nötige Systemsicherheit von hochsensiblen verfahrenstechnischen Anlagen und von Geräten im Einsatz mit leicht brennbaren Stoffen (z.B. Trocknen von Textilien aus Synthesefasern etc.) ist daher nicht gewährleistet.

Ferner ist aus der EP -A1- 0 380 369 eine Steuer- und Überwachungseinrichtung für Wasserkessel bekannt, sie ist aber nicht auf solche beschränkt. Ein einziger Temperaturfühler befindet sich in gutem thermischen Kontakt mit einem elektrischen Heizelement und detektiert, ob der Wasserkessel mit Flüssigkeit gefüllt ist oder trocken läuft. Vor Beginn der Betriebsaufnahme wird zu Testzwecken, während eines, relativ zur Gesamtbetriebsdauer des Gerätes kurzen Zeitintervalls von 2 s, dem Heizelement eine definierte der Messung des Temperaturverlaufs dienende Heizenergie zugeführt. Nach einer weiteren, kurzen Temperaturausgleichszeit von 4 s wird die Ist-Temperatur gemessen und bei einer Abweichung von einem Sollwert die Speisespannung abgetrennt. Befindet sich die Ist-Temperatur in einem Sollbereichswert, wird in üblicher Weise weitergeheizt.

Nachteilig ist hier vor allem die gute metallische Wärmeleitung, zwischen Heizelement und Temperaturfühler, so dass keine eindeutige Erfassung von variablen Wärmekapazitäten, möglich ist. Im weiteren erfolgt ein Aufheizen des ganzen, den Temperaturfühler umgebenden Bereichs, mit seinen entsprechenden Wärmekapazitäten und resultierenden Zeitkonstanten, so dass rasche Temperaturänderungen grundsätzlich nicht feststellbar sind, bzw. zum vorzeitigen Abschalten der Speisespannung führen.

Es ist Aufgabe der Erfindung die vorgängig aufgeführten Nachteile zu beheben und, ein Verfahren für physikalisch/technische Geräte, Heizvorrichtungen und verfahrenstechnische Anlagen etc. zu schaffen, welches erlaubt, mögliche unzulässige Betriebstemperaturen vorzeitig zu erkennen und die Energiezufuhr zur Heizvorrichtung abzuschalten und Fehlermeldungen zu erzeugen.

Dabei sollen die meist in diesen Geräten eingesetzten Heizelemente zuverlässig vor Überhitzung geschützt werden, wenn sich physikalische Parameter wie die Wärmespeicherkapazität, die Leitfähigkeit und/oder die Kühlung des Gerätes verändern, insbesondere aber wenn ein Wärmeträger ausfällt oder nur in ungenügender Menge zur Verfügung steht. Die Brandgefahr bei wassergefüllten Heizgeräten (Radiatoren) soll eliminiert werden, auch in Fällen, wo ein wiederholtes Einschalten des nicht genügend gefüllten Gerätes zu einer sukzessiven Überhitzung führen könnte.

Ebenfalls soll eine beeinträchtigte Funktionsfähigkeit des Gerätes sicher festgestellt werden, wenn die vorgesehene Oberflächentemperatur der Heizvorrichtung nicht erreichbar ist.

Diese Aufgabe wird gemäss den Merkmalen des Anspruchs 1 gelöst.

Unter dem im Patentanspruch verwendeten Begriff Sollbereichswert werden Sollwerte verstanden, die sich innerhalb eines zulässigen Betriebsintervalls befinden.

Die Bestimmung von resultierenden Temperaturerhöhungen erfolgt präzise mittels genau definierbarer, reproduzierter Energieinhalte und berücksichtigt auf einfachste Weise systembedingte, zeitabhängige Wärmeleitungen und Abstrahlungen durch den Einbezug der Temperaturausgleichszeit.

Das erfindungsgemässe Verfahren lässt sich mit einem einzigen Test-Impuls realisieren.

Die Überwachung der zeitabhängigen Wärmeableitung ist insbesondere bei Anwendungen in der Verfahrenstechnik von Bedeutung, wenn Zustandsänderungen, wie das Auftreten einer Dampfphase und/oder Leckverluste und/oder Massenänderungen, bei der Steuerung der Heizvorrichtung, sicherheitsbedingt berücksichtigt werden müssen.

Wiederholte Einschaltversuche bleiben ohne Folgen, da die Energiezufuhr definitiv abgeschaltet ist.

Die Schaltungsanordnung zur Durchführung des Verfahrens ist durch die Merkmale des Anspruchs 6 charakterisiert.

In weiteren abhängigen Ansprüchen sind vorteilhafte Ausführungen und Verwendungen des Erfindungsgegenstandes näher beschrieben.

Die Aufteilung in Inkremente, Anspruch 2, erlaubt eine einfache Sollwerteingabe mit Hilfe von Binärzahlen.

Die Erhöhung des Sollbereichwertes um jeweils einen konstanten Wert stellt eine besonders einfache Lösung dar, Anspruch 3.

Der Verfahrensablauf nach Anspruch 4 erlaubt ein Gerät auf seine Funktionssicherheit zu überprüfen, ohne dass störende Betriebsunterbrüche notwendig sind.

Die Festlegung eines oberen und eines unteren zulässigen Sollwertes kann gemäss Anspruch 5 experimentell erfolgen und durch eine Einstellung der Schaltschwellen auf einfache Art in die Überwachung integriert werden.

Das Festlegen einer zulässigen Grenztemperatur, verhindert eine Überhitzung der Heizvorrichtung durch das Überwachungsverfahren ("Tests") selbst.

Die Schaltungsanordnungen nach Anspruch 6 und 7 erlauben, durch den Einbezug weiterer Sensoren, wie Strömungswächter, Thermoelemente etc., die vorhandenen Wärmekapazitäten bzw. die Wärmeleitfähigkeit sowie die Feststellung einer unzulässigen Wärmeabfuhr auf einfache Weise in die Überwachung einzubeziehen.

Eine bevorzugte Anwendung des Verfahrens betrifft die Überwachung der Füllmenge eines Wärmeträgers in einem Heizkörper, sie hat sich insbesondere für sogenannte Handtuch-Radiatoren (= Wärmekörper) bewährt.

Nachfolgend werden anhand von Zeichnungen Ausführungsbeispiele des Erfindungsgegenstandes näher beschrieben.

Es zeigen:
- Fig. 1: einen vereinfacht dargestellten Handtuch-Wärmekörper mit einem lotrecht stehenden Heizelement,
- Fig. 2: den charakteristischen Verlauf der anfänglichen Betriebstemperatur eines erfindungsgemäss überwachten Gerätes,
- Fig. 3: eine Schaltungsanordnung zur Überwachung der Betriebstemperatur des Wärmekörpers Fig. 1,
- Fig. 4: eine beispielsweise Schaltungsanordnung zur Überwachung der Betriebstemperatur eines mit einem Wärmeträger gefüllten weiteren Radiators und
- Fig. 5: das praktische Betriebsverhalten des erfindungsgemäss überwachten Wärmekörpers Fig. 1

Nachfolgend sind gleiche Funktionsteile mit gleichen Bezugsziffern versehen.

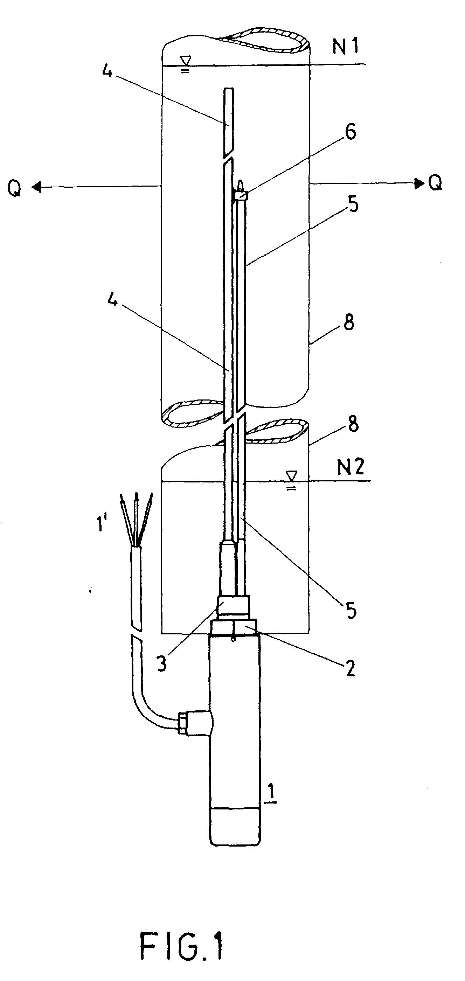

In Fig. 1 ist mit 1 eine Heizvorrichtung bezeichnet. Im vorliegenden Fall ist diese Heizvorrichtung ein Heizelement, eine sogenannte Heizpatrone. Diese ist im unteren Bereich eines Heizkörpers 8 mittels einer zentralen Montage-Mutter 2 lotrecht eingesetzt; aus einem Flanschstück 3 ragen ein Heizstab 4 und ein parallel hierzu verlaufender, etwas kürzerer Sensorstab 5 in einen Wärmeträger hinein. Der Sensorstab 5 ist in einem Lagerring 6 geführt und enthält als Messglied einen handelsüblichen temperaturabhängigen Widerstand (PTC-Widerstand, Philips Typ KTY83).

Im vorliegenden Fall besteht der Wärmeträger aus Wasser; das zulässige untere Füllniveau für den Wärmeträger ist mit N1 bezeichnet, ein beispielweises unzulässiges Niveau mit N2. Die radial an die Luft abgestrahlte Wärmemenge ist durch Pfeile Q charakterisiert.

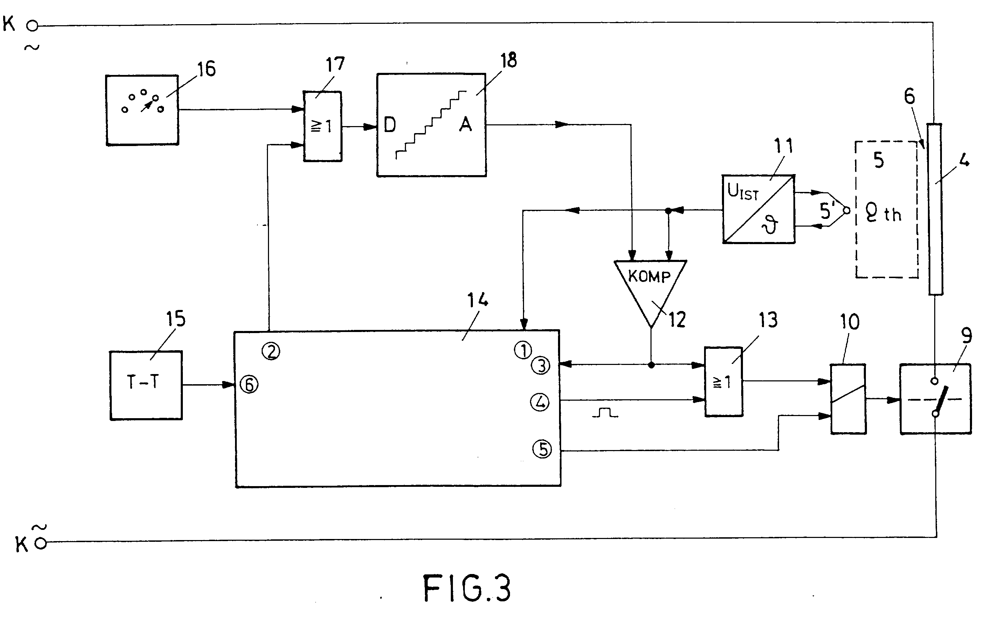

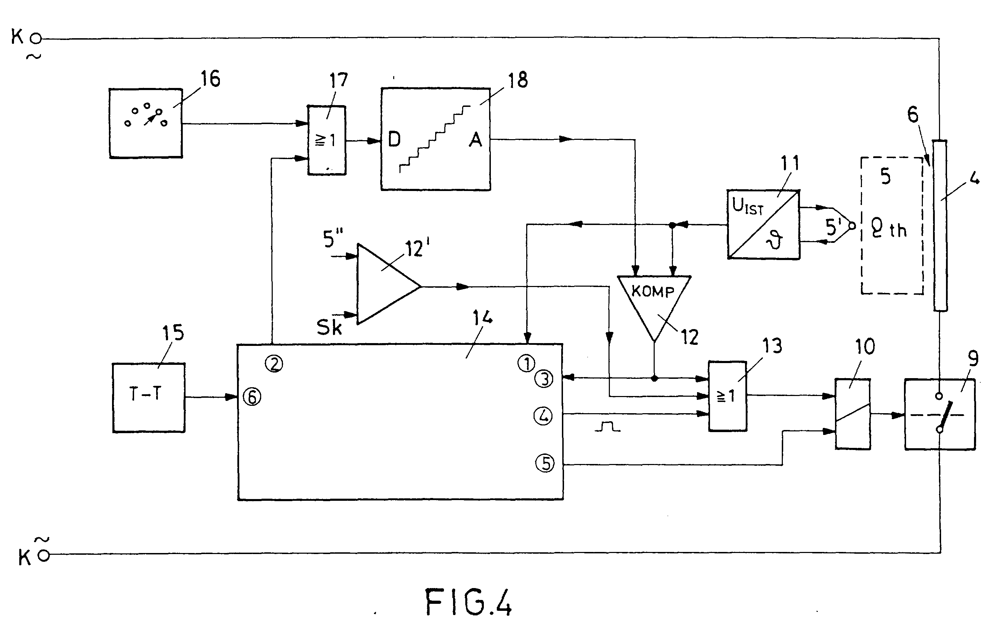

Die Energiezufuhr zur Heizvorrichtung erfolgt über einen Netzanschluss 1', der über die später zu beschreibende Überwachungsschaltung, Schaltungsanordnungen Fig. 3 oder 4, geführt ist.

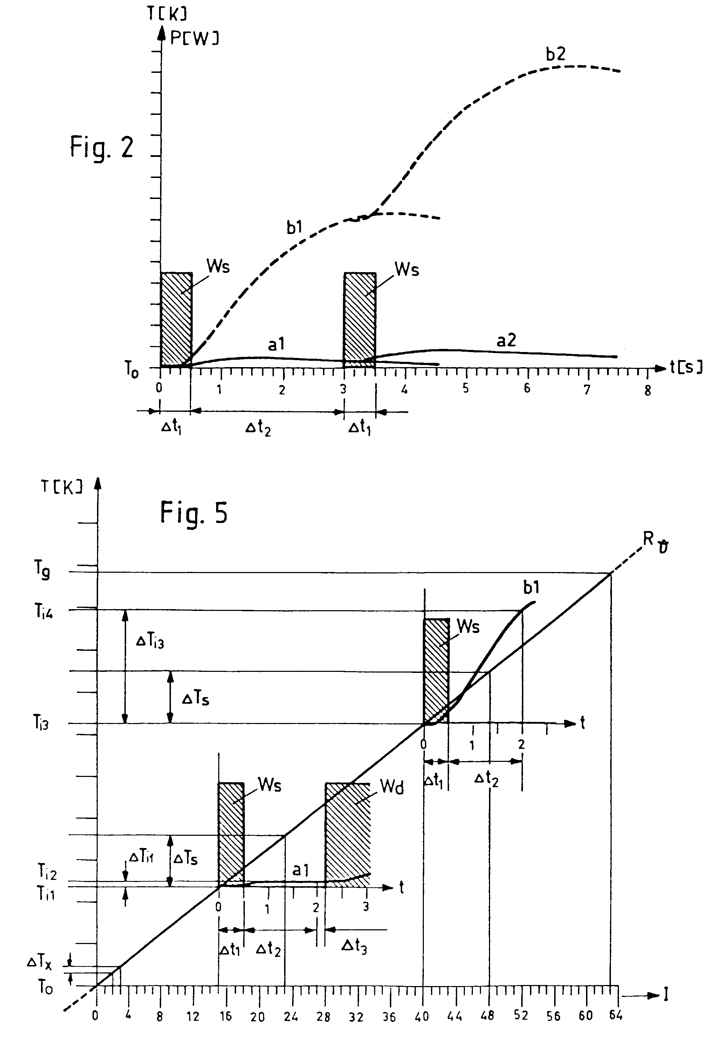

Die Betriebstemperatur eines physikalisch technischen Gerätes zeigt stellvertretend den in Fig. 2 charakteristischen Verlauf. Die Abszisse stellt die Zeitachse in Sekunden dar; die Ordinate die Temperatur in Grad Kelvin resp. die zugeführte Heizleistung P ist in Watt eingetragen.

Wird nun dem Gerät ein Energie-Impuls Ws während der Zeit Δ t₁ zugeführt, steigt die Temperatur bei intaktem Gerät, d.h. der korrekten Wärmekapazität und dem entsprechenden Wärmeleitverhalten von der Raumtemperatur T₀ = 293 °K gemäss dem Kurvenverlauf al leicht an, um nachher wieder, entsprechend dem Abstrahlverhalten des Gerätes, asymptotisch abzufallen. Wird nach einer sogenannten Temperaturausgleichszeit Δ t₂ ein weiterer Heizenergie-Impuls Ws zugeführt, so steigt die Temperatur an der Mess-Stelle entsprechend a2 an, um nachher wieder abzufallen.

Stimmt das Wärmespeicherverhalten, beispielsweise aufgrund fehlender oder nur ungenügend vorhandener Wärmeträger nicht mit den berechneten, zulässigen Werten überein, so entsteht ein Temperaturverlauf nach b1, b2, d.h. das Gerät wird in unzulässiger Weise überhitzt.

Nach der im Patentanspruch definierten Lehre tritt dies nicht ein, da vor der zweiten Energiezufuhr bereits eine Temperatur ausserhalb des zulässigen Sollbereichs festgestellt und die Stromzufuhr unterbrochen würde.

Die Schaltungsanordnung nach Fig. 3 beinhaltet eine notwendige Überwachung eines Heizkörpers inbezug auf das Vorhandensein eines Wärmeträgers. Sie kann gemäss Fig. 4 in ihrer erweiterten Form zusätzlich einen, beispielsweise bei offenem Ventil, übermässig durchströmten und damit zu sehr gekühlten Heizkörper erkennen und signalisieren.

Gemäss Fig. 3 liegt die Klemmenspannung K, die Wechselspannung des Netzes, an der Heizwicklung des Heizstabes 4, Fig. 1. Im Stromkreis befindet sich ein Schalter 9, der durch eine Relaisspule 10 ansteuerbar ist. Am Heizstab 4 ist der Sensorstab 5 angebracht und damit thermisch angekoppelt, was durch 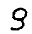 th symbolisiert ist. Als Sensor dient ein PTC-Widerstand, dessen Widerstandsänderung in einem Istwertgeber 11 in eine Spannung U_{IST} umgesetzt wird.

Ein Sollwertgeber 16 ist mit dem Signal "2", dem imkrementierten Sollwertsignal der Testmessung über eine Torschaltung 17 mit einer ODER-Funktion verknüpft. Der Ausgang der Torschaltung 17 ist auf einen Digital/Analog-Wandler 18 geführt, dessen analoger Ausgang A zum einen Eingang eines Komparators 12 geschaltet ist. Dem zweiten Eingang dieses Komparators 12 ist die dem Istwert der Temperatur entsprechende Spannung U_{IST} zugeführt.

Eine Zeitsteuerung 15, ein sogenannter Timer-Test T-T steuert in an sich bekannter Weise periodisch den Testablauf und führt sein Steuersignal "6" einem Eingang der Testschaltung 14 zu. Dieser Testschaltung 14 ist zusätzlich am weiteren Eingang "1" die Spannung U_{IST} zugeleitet. Der Ausgang des Komparators 12 wirkt einerseits auf die Testschaltung 14 und ist andererseits über eine weitere Torschaltung 13 mit ihrer ODER-Funktion mit dem Signalausgang "4", welcher einen Test-impuls führt, zusammengefasst. Der Ausgang der Torschaltung 13 steuert die Relais-Spule 10; ebenso steuert der Ausgang "5" im Falle einer Notabschaltung die Relaisspule 10 an.

Diese relativ einfache Schaltungsanordnung erlaubt die sichere Feststellung eines unzulässig erwärmten Sensorstabes 5 durch einen Vergleich der mit dem PTC-Widerstand 5' festgestellten Temperatur mit der zu erwartenden Soll-Temperatur.

Die gegenüber Fig. 3 erweiterte Schaltungsanordnung gemäss Fig. 4 zeigt zusätzlich einen zum Komparator 12 gleichartigen Komparator 12'. Dieser ist auf einen weiteren Eingang der Torschaltung 13 geführt und vergleicht die an weiteren Sensoren 5" gemessenen Werte mit konstanten Sollwerten Sk.

Im vorliegenden Fall handelt es sich beim Sensor 5" um ein Thermoelement, welches die Wassertemperatur der Heizvorrichtung auf ein vorgegebenes Minimum überwacht.

Der Einfachheit halber sind in den Fig. 3 und 4 nur die Abschaltung der Energiezufuhr des Heizstabes 4 dargestellt; in analoger Weise können selbstverständlich Fehlermeldungen generiert und dem geeigneten Empfänger übermittelt werden.

Fig. 5 zeigt in der Abszisse 64 Inkremente I; auf der Ordinate ist die Temperatur T in K aufgetragen. Eine Temperaturkennlinie R 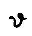 des PTC-Widerstandes 5', Fig. 3, verbindet die aktuelle Raumtemperatur T₀ = 278 K bis zur Grenztemperatur Tg = 343 K, vereinfacht dargestellt linear. Auf dieser Kennlinie R 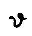 sind zwei Testbeispiele eingezeichnet. Dabei gelten:
a1 Temperaturverlauf mit Wärmeträger
b1 Temperaturverlauf ohne Wärmeträger
I Inkremente
R 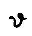 Temperaturkennlinie (PTC)
To (unterste) Raumtemperatur
t Zeitachse
Δ t₁ Zeitintervall Test-Energie
Δ t₂ Temperaturausgleichszeit
t₃ Betriebszeit Heizvorrichtung
Δ Tx Temperatur-Inkrement (konstant)
Ws Energie bei Test
Wd Energie bei Betrieb
- T: Absolut-Temperatur
- Ti₁: Ist-Temperatur
- Ti2: Ist-Temperatur
- Ti3: Ist-Temperatur
- Ti4: Ist-Temperatur
- Tg: Grenztemperatur der Heizvorrichtung
- Δ Ti1: Temperaturänderung
- A Ti3: Temperaturänderung
- ΔTs: 1. Sollbereichswert

Die zum Test verwendete Energie Ws lässt sich insbesondere bei einer Anordung des Sensors am Heizelement derart minimalisieren, dass das Betriebsverhalten des zu überwachenden Gerätes auch bei periodischen Tests auf verschiedenen Temperaturniveaus nicht gestört wird.

Der Erfindungsgegenstand wird mit Vorteil bei Geräten angewandt, deren konstante Heizleistung genau auf einen nach Sicherheitsüberlegungen gewählten Maximalwert ausgelegt ist, er kann jedoch auch bei geregelten Heizvorrichtungen eingesetzt werden und durch periodischen Test deren Betriebssicherheit erhöhen.

## Patentansprüche

1. Verfahren zur Überwachung und Begrenzung der Betriebstemperatur von physikalisch/technischen Geräten, mit veränderbarer Wärmekapazität, welche mit einem elektrischen Heizkörper (8) beheizt und mit einem Temperatursensor (5) überwacht werden, wobei vor Beginn der Betriebsaufnahme und während des Betriebs zu Testzwecken, während eines relativ zur gesamten Betriebsdauer des Gerätes kurzen Zeitintervalls (Dt₁) einer Heizvorrichtung (1) eine definierte, der Messung des Temperaturverlaufs dienende Heizenergie (Ws) zugeführt wird, wobei nach einer Temperaturausgleichszeit (Dt₂) die Ist-Temperatur (Ti₂) gemessen wird und bei einer Abweichung der nach der Temperaturausgleichszeit (Dt₂) gemessenen Temperaturänderung (DTi) im Gerät (1) von einem Sollbereichswert (DTs) die Energiezufuhr vom Netzanschluss (1') abgetrennt wird, und bei einer im Sollbereichswert (DTs) liegenden Temperaturänderung (DTi) während wenigstens einem, gegenüber dem Zeitintervall (Dt₁) längeren, Zeitintervall (Dt₃) dem Heizkörper (2) eine Betriebs-Energie (Wd) zugeführt wird, dadurch gekennzeichnet, dass in der Heizvorrichtung (1) ein Sensorstab (5) thermisch an einen Heizstab (4) angekoppelt wird, dass der zu überwachende Temperaturbereich in gleiche Inkremente (DTx) aufgeteilt wird und dass das Intervall der Temperaturausgleichzeit (Dt₂) auf ein, gegenüber dem Temperaturintervall (DT₁) erheblich grösseres Zeitintervall, insbesondere auf das Drei- bis Fünffache des Temperaturintervalls (DT₁) festgelegt ist, so dass der Wärmeträger auf dessen zeitabhängige Wärmeableitung überprüft wird.

2. Verfahren nach Anspruch 1, dadurch gekennzeichnet, dass der Sollbereichswert (DTs) vor dem weiteren Zeitintervall (Dt₁) auf einen neuen Wert (DTxs) erhöht wird.

3. Verfahren nach Anspruch 2, dadurch gekennzeichnet, dass der Sollbereichswert (DTs) um einen jeweils konstanten Wert auf den neuen Wert (DTxs) erhöht wird.

4. Verfahren nach Anspruch 3, dadurch gekennzeichnet, dass die Sollbereichswerte (DTs, DTxs) und die Ist-Temperatur (DTi) periodisch miteinander verglichen werden.

5. Verfahren nach einem der vorangehenden Ansprüche, dadurch gekennzeichnet, dass die Sollbereichswerte (DTs, DTxs) Grenzwerte, einer unter den zulässigen Betriebsbedingungen des zu überwachenden Gerätes aufgenommenen Temperatur-Kennlinienschar, im jeweiligen Inkrementschritt (DTx) sind.

6. Schaltungsanordnung für die Überwachung und Begrenzung der Betriebstemperatur von physikalisch/technischen Geräten mit veränderbarer Wärmekapazität zur Durchführung des Verfahrens nach Anspruch 1, mit einer Heizvorrichtung (1) mit einem Heizkörper (8) mit Heizstab (4) und einem an diesen Heizstab (4) thermisch angekoppelten Temperatursensor (5) als Temperatur-Istwertgeber, einem Temperatur-Sollwerte speichernden Geber (16), einer Zeitsteuerung (15) und einem das Stromnetz schaltenden Relais (10, 9), dadurch gekennzeichnet, dass der Ausgang des Sollwertgebers (16) über eine ODER-Torschaltung (17) auf einen Digital/Analogkonverter (18) geführt ist, dass dessen Ausgang einem ersten Eingang eines Komparators (12) zugeführt ist, dass der zweite Eingang des Komparators (12) mit dem Ausgang (U_{IST}) des Istwertgebers (11) verbunden ist, der Ausgang des Komparators (12) zu einem Eingang einer weiteren ODER-Torschaltung (13) geführt ist, während am zweiten Eingang dieser Torschaltung (13) der Steuerausgang einer Zeit/Testschaltung (15,14) anliegt, und dass der Ausgang der Torschaltung (13) das Strom-Netz (K) abschaltende Relais (10, 9) ansteuert.

7. Schaltungsanordnung nach Anspruch 6, dadurch gekennzeichnet, dass der ODER-Torschaltung (13) der Ausgang eines weiteren Komparators (12') zugeführt ist, welcher die Ausgangssignale von wenigstens einem weiteren Sensor (5") mit einem konstanten Sollwert (Sk) vergleicht.

## Claims

1. A method for monitoring and limiting the operating temperature of physico-engineering appliances with variable heat capacity which are heated by an electric heating body (8) and monitored by a temperature sensor (5), wherein a specific heating energy (Ws) used for the measurement of the temperature variation is supplied to a heating device (1) before operation recording begins and for test purposes during operation for a time interval (Dt₁) which is short relative to the total period of operation of the appliance, wherein the actual temperature (Ti₂) is measured after a temperature equalization period (Dt₂) and if the temperature variation (DTi) in the appliance (1) measured after the temperature equalization period (Dt₂) deviates from a desired range value (DTs), the energy supply from the mains connection (1') is disconnected, and if the temperature variation (DTi) lies within the desired range value (DTs), an operating energy (Wd) is supplied to the heating body (8) for at least a time interval (Dt₃) which is longer than the time interval (Dt₁), characterised in that a sensor rod (5) is thermally coupled with a heating rod (4) in the heating device (1), in that the temperature range to be monitored is divided into equal increments (DTx) and in that the interval of the temperature equalization period (Dt₂) is set at a time interval which is considerably greater than the temperature interval (DT₁), more particularly three to five times the temperature interval (DT₁), so that the heat carrier is tested for its heat dissipation in dependence on time.

2. A method according to claim 1, characterised in that the desired range value (DTs) is increased to a new value (DTxs) before another time interval (Dt₁).

3. A method according to claim 2, characterised in that the desired range value (DTs) is increased to the new value (DTxs) by a value which is constant in each case.

4. A method according to claim 3, characterised in that the desired range values (DTs, DTxs) and the actual temperature (DTi) are periodically compared with one another.

5. A method according to one of the preceding claims, characterised in that the desired range values (DTs, DTxs) are limit values of a family of temperature characteristics recorded under the permissible operating conditions of the appliance to be monitored, at each incremental step (DTx).

6. A circuit arrangement for monitoring and limiting the operating temperature of physico-engineering appliances with variable heat capacity, for the implementation of the method according to claim 1, comprising a heating device (1) with a heating body (8) comprising a heating rod (4) and a temperature sensor (5) thermally coupled with this heating rod (4) and acting as an actual temperature value indicator, an indicator (16) storing desired temperature values, a time control (15) and a relay (10, 9) connecting the mains supply, characterised in that the output of the desired value indicator (16) is passed via an OR-gate circuit (17) to a digital-analogue converter (18), in that the output thereof is supplied to a first input of a comparator (12), in that the second input of the comparator (12) is connected to the output (U_{IST}) of the actual value indicator (11), the output of the comparator (12) is passed to an input of another OR-gate circuit (13), while the control output of a time/test circuit (15, 14) is applied to the second input of this gate circuit (13), and in that the output of the gate circuit (13) controls the relay (10, 9) disconnecting the mains supply (K).

7. A circuit arrangement according to claim 6, characterised in that the output of another comparator (12') is supplied to the OR-gate circuit (13), the said comparator comparing the output signals of at least one further sensor (5") with a constant desired value (Sk).

## Revendications

1. Procédé de surveillance et de limitation de la température de fonctionnement d'appareils physicotechniques, à capacité thermique variable, qui sont chauffés avec un corps de chauffe électrique (8) et surveillés avec un capteur de température (5), dans lequel une énergie de chauffage définie (Ws) servant à la détermination de la variation de la température est apportée à un dispositif de chauffage (1) avant le début de la mise en marche et pendant la marcher aux fins d'essai, pendant un intervalle de temps (Δt₁) court relativement à la durée totale de marche de l'appareil, la température instantanée (Ti2) est mesurée après un temps d'égalisation de température (Δt₂) et, en cas d'écart de la variation de température (ΔTi) mesurée après le temps d'égalisation de température (Δt₂) dans l'appareil (1) d'une valeur de plage prescrite (ΔTs), l'apport d'énergie du branchement au réseau (1') est coupé, et dans le cas d'une variation de température (ΔTi) située dans la valeur de plage prescrite (ΔTs) pendant au moins un intervalle de temps (Δt₃) plus long que l'intervalle de temps (Δt₁), une énergie de marche (Wd) est apportée au corps de chauffe (2), caractérisé par le fait que dans le dispositif de chauffage (1), une baguette capteur (5) est couplée thermiquement à une baguette chauffante (4), que la plage de températures à surveiller est divisée en incréments égaux (ΔTx) et que l'intervalle de temps d'égalisation de température (Δt₂) est nettement plus grand que l'intervalle de température (ΔT₁), en particulier de trois à cinq fois celui-ci, de sorte que l'évacuation de chaleur fonction du temps du fluide caloporteur est contrôlée.

2. Procédé selon la revendication 1, caractérisé par le fait que la valeur de plage prescrite (ΔTs) est, avant le nouvel intervalle de temps (Δt₁), élevée à une nouvelle valeur (Δtxs).

3. Procédé selon la revendication 2, caractérisé par le fait que la valeur de plage prescrite (ΔTs) est élevée à une nouvelle valeur (ΔTxs) chaque fois d'une valeur constante.

4. Procédé selon la revendication 3, caractérisé par le fait que les valeurs de plage prescrite (ΔTs, ΔTxs) et la température instantanée (ΔTi) sont comparées périodiquement entre elles.

5. Procédé selon l'une des revendications précédentes, caractérisé par le fait que les valeurs de plage prescrite (ΔTs, ΔTxs) sont des valeurs limites d'un faisceau de caractéristiques de température enregistré dans les conditions de fonctionnement admissibles de l'appareil à surveiller, dans le pas incrémental (ΔTx).

6. Montage pour la surveillance et la limitation de la température de fonctionnement d'appareils physicotechniques à capacité thermique variable pour la mise en oeuvre du procédé de la revendication 1, comportant un dispositif de chauffage (1) ayant un corps de chauffe (8) à baguette chauffante (4) et un capteur de température (5) couplé thermiquement à cette baguette chauffante (4) et servant d'émetteur de valeur instantanée de température, un émetteur (16) emmagasinant des valeurs prescrites de température, une commande temporelle (15) et un relais (10, 9) mettant en circuit le réseau, caractérisé par le fait que la sortie de l'émetteur de valeur prescrite (16) est envoyée par l'intermédiaire d'une porte OU (17) à un convertisseur numérique-analogique (18), que la sortie de celui-ci est envoyée à une première entrée d'un comparateur (12), que la deuxième entrée de ce comparateur (12) est reliée à la sortie (Uᵢₙₛₜ) de l'émetteur de valeur instantanée (11), la sortie du comparateur (12) est envoyée à une entrée d'une autre porte OU (13), tandis qu'à la deuxième entrée de cette porte (13) est appliquée la sortie de commande d'un circuit temporel et d'essai (15, 14), et que la sortie de la porte (13) commande des relais (10, 9) qui coupent le réseau (K).

7. Montage selon la revendication 6, caractérisé par le fait qu'à la porte (13) est envoyée la sortie d'un autre comparateur (12') qui compare les signaux de sortie d'au moins un autre capteur (5") avec une valeur prescrite constante (Sk).
